Europäisches Patentamt

European Patent Office

Office européen des brevets

(19)

(11) EP 0 875 002 B1

(12) **FASCICULE DE BREVET EUROPEEN**

(45) Date de publication et mention
de la délivrance du brevet:
**29.12.1999 Bulletin 1999/52**

(21) Numéro de dépôt: **97900639.2**

(22) Date de dépôt: **14.01.1997**

(51) Int Cl.⁶: **G01S 5/14**

(86) Numéro de dépôt international:
**PCT/FR97/00058**

(87) Numéro de publication internationale:
**WO 97/26553 (24.07.1997 Gazette 1997/32)**

(54) **SYSTEME D'AIDE AU PILOTAGE D'AERONEFS A L'AIDE D'UN VISEUR TETE HAUTE**

FLUGZEUGSTEUERHILFSSYSTEM MIT HEAD-UP ANZEIGEVORRICHTUNG

AIRCRAFT PILOTING AID SYSTEM USING A HEAD-UP DISPLAY

(84) Etats contractants désignés:
**DE GB**

(30) Priorité: **19.01.1996 FR 9600603**

(43) Date de publication de la demande:
**04.11.1998 Bulletin 1998/45**

(73) Titulaire: **THOMSON-CSF SEXTANT**
**78141 Vélizy Villacoublay (FR)**

(72) Inventeurs:
• **SICRE, Jean-Luc**
**F-94117 Arcueil Cédex (FR)**

• **GUILLARD, Patrice**
**F-94117 Arcueil Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 670 566**      **FR-A- 2 708 349**
**US-A- 4 405 986**      **US-A- 4 847 603**
**US-A- 4 881 080**      **US-A- 4 990 922**
**US-A- 5 101 356**

## Description

L'invention concerne l'aide au pilotage des aéronefs, principalement au décollage et à l'atterrissage, particulièrement pour permettre aux avions de décoller ou d'atterrir dans des conditions de visibilité médiocres.

On tend à utiliser aujourd'hui des viseurs tête haute (HUD pour "Head-Up Display" en anglais) pour aider au pilotage : ces viseurs permettent d'afficher à l'intention du pilote des indications visuelles qui se superposent au paysage réel et qui facilitent l'appréciation par le pilote de l'état de l'avion à un moment donné. Les indications principales qu'on peut afficher sont :

- une ligne d'horizon qui se superpose à l'horizon réel et qui remplace ce dernier si les conditions de visibilité sont mauvaises ; ainsi, le pilote voit toujours une ligne d'horizon, qui est horizontale si l'avion est horizontal et qui s'incline si l'avion s'incline autour de son axe longitudinal;
- un symbole d'assiette qui se déplace plus ou moins haut au dessus ou au dessous de l'horizon en fonction de l'assiette longitudinale de l'avion : le pilote peut d'un coup d'oeil évaluer l'assiette longitudinale qui est un paramètre essentiel pour le décollage ou l'atterrissage, ou la remise de gaz;
- et un symbole de vecteur vitesse permettant également d'évaluer d'un coup d'oeil la trajectoire instantanée de l'avion.

Ainsi, en cas de mauvaise visibilité, ces symboles permettent au pilote de mieux évaluer la situation de l'avion par rapport à une piste d'atterrissage et un horizon qu'il voit mal. Par exemple, un système HUD associé à un pilote automatique permet d'atterrir avec une visibilité verticale de environ 10 mètres (35 pieds), et une visibilité horizontale de 125 mètres. Sans système HUD, les conditions de visibilité minimales à respecter devraient être de 15 mètres (50 pieds) en vertical et 200 mètres en horizontal, dans le cas où l'avion est équipé d'un pilote automatique contrôlé par deux centrales anémo-barométriques fournissant l'altitude et la vitesse verticale, et par deux centrales de référence d'assiette de type AHRS (Attitude Heading Reference System) sans plate-forme inertielle, associées à deux boussoles, fournissant des informations d'assiette longitudinale et latérale (sur cadrans et non en superposition avec le paysage) ainsi que les accélérations verticale et horizontale et le cap magnétique.

Le viseur tête haute HUD affiche des symboles élaborés par un calculateur qui utilise des informations fournies par divers détecteurs équipant l'avion (assiette, cap, vitesses, position, altitude, etc.) un tel système est décrit dans le document US-A-4 847 603.

Cependant, l'affichage des symboles d'assiette et de vecteur vitesse en HUD n'a de sens que s'il est suffisamment précis. Si ce n'était pas le cas, les symboles seraient plus gênants qu'utiles, le pilote ne pouvant s'y fier pour atterrir ou décoller.

C'est pourquoi, on associe en général à un viseur tête-haute une centrale de référence inertielle (IRS pour "Inertial Reference System") capable de donner très précisément l'assiette (par exemple à 0,2° près), et le cap (par exemple à 0,5° près). C'est cette centrale IRS qui fournit au calculateur du viseur tête-haute les données d'attitude, de position, de vitesse inertielle nécessaires au calcul et à l'affichage des symboles sur le viseur HUD.

Une centrale inertielle coûte malheureusement très cher. Une centrale AHRS est beaucoup moins chère mais moins précise. Pour une bonne centrale AHRS, la précision de cap peut être de 1,5° et la précision d'assiette de 0,5°. Dans certains cas la centrale est encore moins précise et d'ailleurs insuffisamment précise pour que l'affichage de la symbologie en viseur tête-haute à partir des informations de la centrale ait encore vraiment un sens.

Pourtant les compagnies aériennes éprouvent le besoin de moderniser des avions en les équipant de viseurs tête haute alors qu'ils ne sont équipés que de centrales de référence de cap et d'assiette AHRS de qualité moyenne, ceci afin que ces avions puissent atterrir et décoller pratiquement tous les jours de l'année quelles que soient les conditions météorologiques.

On devrait donc théoriquement remplacer ces centrales AHRS par des centrales inertielles IRS en même temps qu'on installe le viseur tête haute et son calculateur, afin que le calculateur reçoive des informations précises de cette centrale. Mais l'adjonction d'une centrale IRS rend le système trop coûteux.

Il existe donc un besoin pour des systèmes d'aide au pilotage

- qui utilisent un viseur tête haute nécessitant des informations précises de cap et d'assiette
- et qui, pour des raisons de coût, n'utilisent cependant pas de centrale inertielle pour fournir ces informations.

On propose selon l'invention un tel système d'aide au pilotage d'un aéronef, qui comporte un viseur tête haute et son calculateur, le calculateur comportant des moyens pour afficher dans le viseur des symboles d'aide au pilotage et notamment un symbole d'assiette de l'aéronef, caractérisé en ce qu'il comprend en outre une centrale de cap et d'assiette non inertielle AHRS associée à une boussole, pour fournir des informations de cap, d'assiette, d'accélérations, et de vitesse verticale au calculateur en vue de l'affichage des symboles sur le viseur tête haute, et deux récepteurs de positionnement par satellite ayant des antennes alignées sensiblement selon l'axe longitudinal de l'avion, les récepteurs fournissant des signaux au calculateur, et des moyens pour confronter les mesures fournies par les deux récepteurs pour établir des informations de cap et d'assiette de l'aéronef à partir de comparaisons de phase des signaux reçus au même moment d'un même satellite par les deux récepteurs, des moyens dans le calculateur pour calculer une moyenne des écarts entre les informations d'assiette et de cap calculées à partir des signaux des récepteurs de positionnement par satellite et les informations d'assiette et de cap fournies par la centrale AHRS, et des moyens pour corriger, à partir de cette moyenne d'écarts, les informations de cap et d'assiette fournies par la centrale AHRS en vue de générer, à partir des informations corrigées, les symboles à afficher sur le viseur tête haute.

Ainsi, les récepteurs de signaux satellites fournissent régulièrement des informations précises de cap et d'assiette longitudinale, qui permettent de calculer périodiquement une correction de l'information de cap et d'assiette longitudinale fournie par la centrale AHRS. La correction est de préférence moyennée sur un certain nombre de calculs successifs d'erreur (moyenne glissante) de manière que les informations de la centrale soient corrigées d'une valeur qui varie lentement. Si ce n'était pas le cas, les variations de la valeur de correction appliquées au viseur au moment du calcul de cap et d'assiette par les récepteurs de positionnement par satellite pourraient provoquer des discontinuités inacceptables de la position des symboles d'assiette longitudinale et de cap sur le viseur tête haute.

De préférence, pour assurer une redondance de fonctionnement du système en cas de défaillance de certains éléments, on prévoit que le calculateur de viseur tête haute comporte deux voies de calcul séparées identiques, qu'il y a deux centrales de cap et d'assiette fournissant leurs informations respectivement aux deux voies de calcul, et que les deux récepteurs de signaux satellites sont couplés chacun aux deux voies de calcul.

Pour tenir compte du fait que les deux antennes des récepteurs ne sont pas forcément exactement alignées avec l'axe de l'avion, et même pas parfaitement alignées avec un axe parallèle à l'axe de l'avion, on prévoit que l'assiette calculée par les récepteurs est modifiée pour tenir compte de ce défaut avant d'être comparée à l'assiette fournie par la centrale AHRS. La correction dépend du roulis de l'avion, et on prévoit de préférence que le calculateur du viseur tête haute effectue une correction de l'assiette à partir d'une table de corrections donnant une correction pour chaque valeur de roulis. Les valeurs de roulis sont transmises par la centrale AHRS.

Pour le calcul de l'attitude par les récepteurs de signaux de satellites, on peut prévoir que les deux récepteurs envoient des informations de phase de porteuse au calculateur HUD qui calcule lui-même l'attitude à partir de deux informations de phase, ou bien que les deux récepteurs communiquent directement entre eux, l'un d'eux calculant l'attitude.

La communication entre les récepteurs ou la communication entre un récepteur et la centrale AHRS se fait par l'intermédiaire de bus ARINC (bus de communication série normalisé pour l'aéronautique).

D'autres caractéristiques et avantages de l'invention apparaîtront à la lecture de la description détaillée qui suit et qui est faite en référence aux dessins annexés dans lesquels :

-    la figure 1 représente schématiquement la symbologie qu'on souhaite afficher sur le viseur tête haute;
-    la figure 2 représente la constitution générale du système selon l'invention;
-    la figure 3 représente la position des antennes de réception de signaux satellites;
-    la figure 4 représente la constitution globale d'un récepteur GPS;
-    la figure 5 la constitution du circuit de traitement de signal du récepteur.

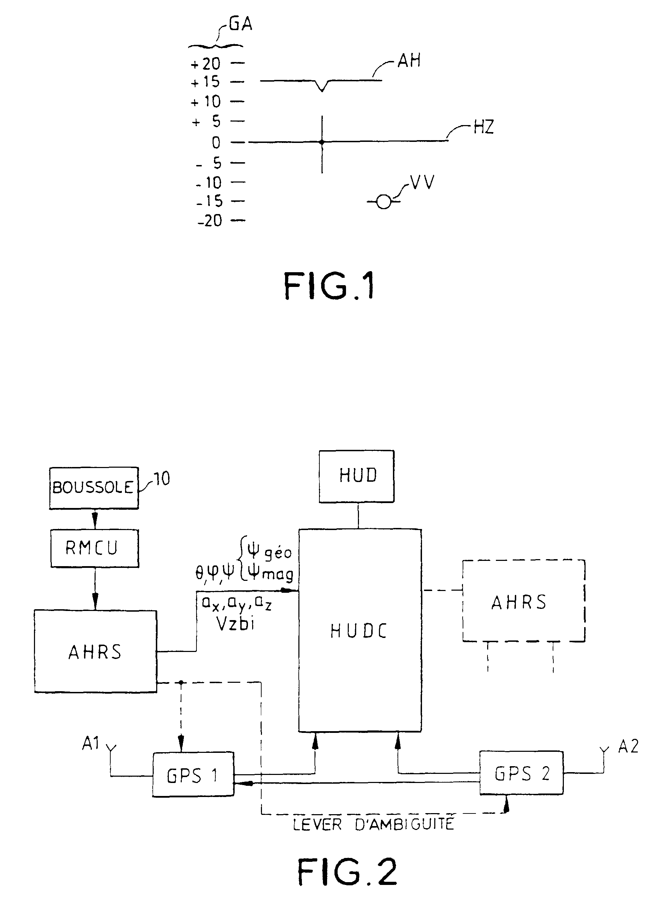

La figure 1 représente les informations symboliques qu'on souhaite afficher sur un viseur tête haute (HUD) pour aider au pilotage (décollage et atterrissage) dans des conditions de visibilité difficiles.

On projette sur l'écran d'affichage une ligne d'horizon artificiel HZ, horizontal si l'avion est horizontal, inclinée si l'avion est incliné; cette ligne reste superposée, quelle que soit l'attitude de l'avion, à la ligne d'horizon réelle que le pilote voit à travers le cockpit.

On projette également un symbole d'assiette longitudinale AH, au dessus de la ligne d'horizon si le nez de l'avion est orienté vers le haut (situation normale, en particulier bien sûr pour l'atterrissage et le décollage où ce symbole est le plus utile). Une échelle de graduations de l'assiette GA est également projetée par le viseur, et on peut d'un coup d'oeil voir si l'assiette est celle qu'on souhaite, le symbole d'assiette se déplaçant devant cette échelle en fonction de l'assiette réelle de l'avion.

Enfin, on souhaite afficher un vecteur vitesse (vitesse par rapport au sol) sous forme d'un symbole W dont la position se déplace selon la vitesse inertielle de l'avion. La position du symbole VV permet de voir d'un coup d'oeil les conditions de vent au décollage et à l'atterrissage, le vecteur vitesse étant décalé latéralement par rapport au symbole d'assiette AH en présence de vent du fait que la vitesse réelle de l'avion ne correspond pas alors à son cap.

Selon l'invention, on utilise pour ce calcul les informations provenant d'une centrale de référence non inertielle AHRS, corrigées par des récepteurs de positionnement par satellite; ces récepteurs sont en pratique des récepteurs de signaux du système GPS ("Global Positionning System").

La figure 2 représente le schéma d'organisation générale du système d'aide au pilotage selon l'invention.

La centrale AHRS, centrale de référence d'attitude et de cap sans plate-forme inertielle, qui est une plate-forme asservie comportant des détecteurs gyrométriques et accélérométriques mesurant les déplacements de cette plate-forme, fournit sur un bus ARINC 429 des informations numériques de cap magnétique Ψmag, d'assiette longitudinale θ, de roulis φ, d'accélérations ax, ay, az liées à la structure de l'avion, et de vitesse verticale baro-inertielle Vzbi.

Ces informations peuvent être affichées classiquement sur des cadrans, mais sont ici transmises au calculateur de viseur tête haute désigné par l'appellation HUDC sur la figure 2. Ce calculateur pilote directement le viseur tête haute HUD dont la fonction est de projeter devant le pilote les symboles d'aide à la navigation mentionnés ci-dessus.

La centrale AHRS fait appel classiquement à une boussole 10 qui peut être un magnétomètre ou une vanne de flux, qui détecte la direction du nord magnétique terrestre. Cette direction est transmise sous forme de signal analogique à la centrale AHRS par l'intermédiaire d'un circuit RMCU de compensation des masses magnétiques de l'avion.

On utilise selon l'invention deux récepteurs de positionnement par satellite capables de fournir une information de phase de porteuse, ces récepteurs fournissant des informations telles qu'une mesure interférométrique sur la phase de la porteuse radiofréquence soit possible. Ces récepteurs doivent donc tous deux utiliser une boucle d'asservissement de phase de porteuse. On rappelle que les signaux de positionnement émis par les satellites comportent une fréquence porteuse radio (1575,42 MHz pour les applications civiles du système GPS), modulée en phase avec des codes pseudo-aléatoires d'étalement de spectre, d'une manière permettant de détecter le signal en présence d'un rapport signal/bruit très faible et de détecter avec un même circuit radiofréquence les signaux provenant de plusieurs satellites correspondant à des codes différents. Les changements de phase sont produits à des instants très précis, pour permettre le calcul de position par le récepteur lorsqu'il reçoit des signaux de plusieurs satellites différents. Une analyse fine des déphasages de la porteuse entre deux récepteurs dont les antennes sont séparées par une distance connue permet de calculer une direction d'orientation de la ligne séparant les centres de phase des antennes.

Les récepteurs sont désignés par les références GPS1 et GPS2. Ils sont reliés au calculateur HUDC par des bus ARINC 429. On verra qu'on peut recueillir de plusieurs manières les informations élaborées dans les récepteurs, mais dans tous les cas on doit pouvoir rapporter à un même instant de lecture les mesures de phase fournies par les deux récepteurs.

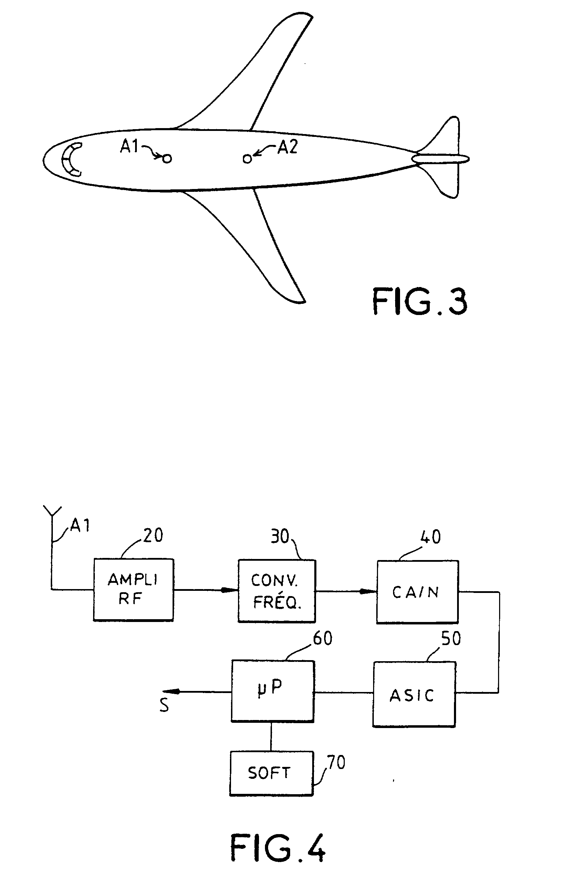

Les antennes de réception A1 et A2 des deux récepteurs sont placées sur le dessus de l'avion, de préférence parallèlement à l'axe principal de l'avion, et à une distance l'une de l'autre parfaitement connue. La figure 3 représente une vue de dessus de l'avion avec les positions d'antennes A1 et A2.

Connaissant la distance A1A2 (mesurée entre les centres de phase des antennes), on peut faire une mesure du vecteur A1A2 dans un repère terrestre, et en déduire une assiette longitudinale et un cap de l'avion dans ce repère terrestre.

Ces informations pourraient se substituer à celles qui sont fournies avec moins de précision par la centrale AHRS. Toutefois, on propose selon l'invention de conserver les informations de la centrale AHRS en les corrigeant périodiquement par les informations de cap et d'assiette fournies par les deux récepteurs GPS1 et GPS2. Cela permet notamment de bénéficier de la réponse plus rapide de la centrale AHRS en cas de modifications rapides de vitesse, assiette, position, de l'avion.

Un des avantages de l'invention est qu'on n'a pratiquement pas de matériel à rajouter par rapport aux appareils qui sont de toutes façons nécessaires dans l'avion : un récepteur GPS est nécessaire pour les mesures de position et vitesse de l'avion, et en pratique deux récepteurs sont nécessaires pour des questions de redondance en cas de panne. La seule contrainte est qu'il faut être sûr de pouvoir ramener à un même instant de mesure, avec une très grande précision les informations fournies par les deux récepteurs, et il faut de plus que ces récepteurs puissent fournir des informations de phase de porteuse.

Les récepteurs utilisés dans cette invention pour des informations d'assiette et de cap (mesure interférométrique entre les deux récepteurs) mesureront donc aussi les données classiques de position, vitesse et temps que fournissent habituellement les récepteurs de positionnement par satellite.

On notera que, de même que la centrale AHRS va être corrigée en fonction des mesures interférométriques des récepteurs GPS1, GPS2, la mesure interférométrique elle-même pourra utiliser les informations de cap (non corrigées) fournies directement par la centrale AHRS. En effet, un des problèmes de mesure qui se posent dans une mesure interférométrique de phase de porteuse est le lever d'ambiguïté puisque la direction du vecteur de base A1A2 définie par mesure interférométrique est au départ ambiguë du fait de la très courte longueur d'onde (de l'ordre de 20 cm) de la porteuse radiofréquence.

Ici, la complémentarité entre la centrale AHRS et les récepteurs GPS est excellente puisque les récepteurs peuvent corriger la centrale AHRS alors que la centrale AHRS fournit au départ les moyens de lever d'ambiguïté permettant d'accélérer considérablement l'obtention des éléments de correction destinées à la centrale.

Les éléments de correction peuvent résulter d'une comparaison périodique, dans le calculateur HUDC, d'une assiette et d'un cap fournies par la centrale AHRS et d'une assiette et d'un cap calculés par les récepteurs à l'aide de comparaisons de phase de porteuse dans les deux récepteurs. La comparaison peut être faite toutes les 100 ms par exemple. Les écarts sont moyennés sur un certain nombre de périodes, la moyenne étant de préférence glissante (par exemple on utilise à chaque fois la moyenne des écarts correspondant aux dix dernières comparaisons). L'écart moyen ainsi calculé est appliqué comme correction aux valeurs de cap et d'assiette fournies par la centrale. Et le calculateur HUDC utilise les valeurs corrigées pour l'affichage des symboles d'aide au pilotage.

Pour des raisons de prévention des défaillances, on peut prévoir un système redondant avec deux centrales AHRS distinctes, le calculateur comportant deux voies de calcul séparées recevant chacun les informations d'une centrale respective. Les récepteurs GPS1 et GPS2 fournissent également des informations de position, temps et vitesse redondantes. Cependant, l'information de correction de cap et d'assiette n'est plus fournie si un des récepteurs tombe en panne. Dans ce cas, les informations des centrales AHRS sont utilisées sans correction.

Etant donné que l'invention utilise nécessairement des récepteurs capables de fournir des informations de phase de porteuse, on rappellera brièvement ci-après le principe de tels récepteurs et la nature des informations qu'ils fournissent.

La figure 4 rappelle sommairement la constitution générale d'un récepteur de positionnement par satellite.

Il comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés 70. Le microprocesseur 60 fournit des signaux numériques qui sont les résultats de mesures et de calculs effectués à partir des signaux numériques présents dans le signal 50.

Ces signaux fournis à la sortie S du récepteur GPS, comportent notamment un point PVT (position, vitesse, temps), nécessaire pour la navigation de l'aéronef, et également les informations numériques de phase nécessaires pour un calcul de cap et d'assiette de l'aéronef plus précis que celui de la centrale AHRS.

Si deux récepteurs GPS1 et GPS2 communiquent entre eux pour un calcul de direction du vecteur A1A2 séparant les centres de phase des deux antennes A1 et A2, cette communication se fait par l'intermédiaire du microprocesseur 60; bien entendu, si l'un des récepteurs fait un calcul de direction de vecteur A1A2 à partir des informations fournies par l'autre récepteur, le logiciel du premier comporte tous les programmes nécessaires à ce calcul. Cependant, le calcul de direction peut aussi se faire dans le calculateur HUDC s'il reçoit seulement des informations de phase brutes des deux récepteurs et des informations de cosinus directeurs des lignes de visée des satellites et non une information calculée de vecteur direction A1A2.

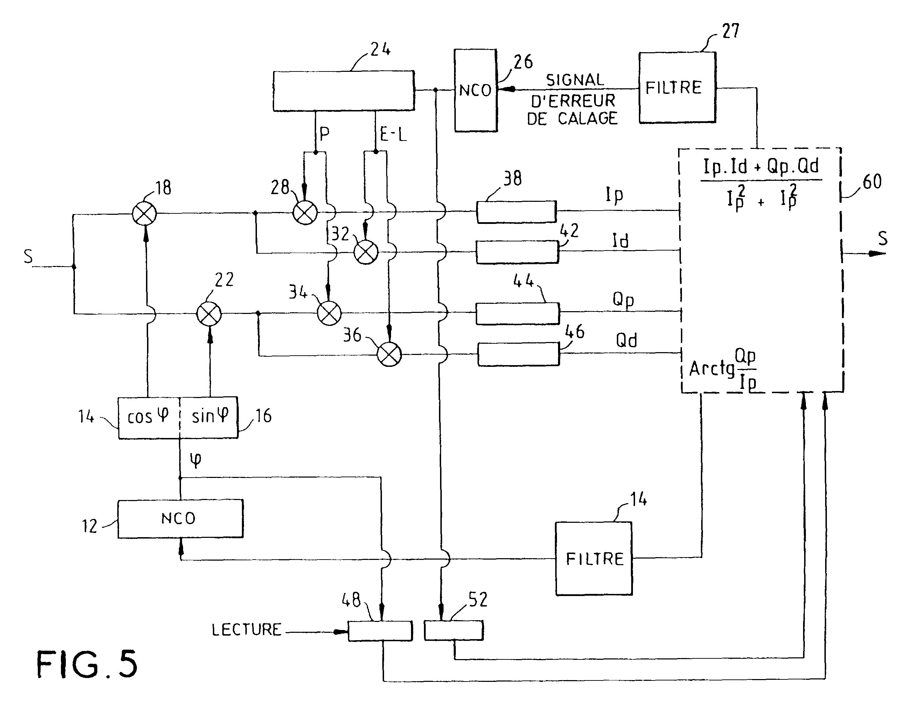

La figure 5 représente la constitution globale du circuit de traitement de signal numérique d'un récepteur GPS permettant la mesure de phase de porteuse.

Les signaux transposés classiquement et numérisés par le convertisseur analogique numérique 40 sont appliqués au circuit de traitement numérique de signal 50, comportant autant de canaux de traitement qu'on veut recevoir de satellites à la fois. Dans le cas d'un traitement multiplexé, les satellites peuvent être traités successivement par un même canal. Un seul canal est représenté sur la figure 5.

Le canal comporte classiquement une double boucle d'asservissement : asservissement de phase de porteuse et asservissement de phase de code.

La boucle de phase de porteuse utilise essentiellement un oscillateur local 12 à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement, et la mesure de vitesse doppler peut être faite à partir des signaux numériques présents dans les boucles.

Cette phase numérique est transformée en deux signaux périodiques sinusoïdaux en phase et en quadrature de phase par des circuits 14, 16 établissant le cosinus et le sinus de cette phase. Des multiplieurs 18, 22 permettent de multiplier par ces fonctions sinusoïdales le signal reçu du satellite (transposé en basse fréquence et conservant sa modulation de phase représentant le code pseudo-aléatoire émis par le satellite avec d'autres données de modulation).

Le signal ainsi multiplié par une fonction sinusoïdale sur deux voies, en phase (voie I) et en quadrature de phase (voie Q), est corrélé avec des codes pseudo-aléatoires produits localement, afin de constituer la boucle d'asservissement de code permettant d'asservir les codes locaux sur la code reçu du satellite et pouvoir ensuite déterminer la position temporelle exacte des codes locaux ainsi asservis.

La boucle d'asservissement de code comporte un générateur de code 24, piloté par un oscillateur 26 à contrôle numérique de phase recevant lui-même un signal d'erreur de corrélation de code filtré par un filtre de boucle 27.

Le générateur de code 24 peut produire un code pseudo-aléatoire P dit "ponctuel", réplique d'un code émis par un satellite et destiné à être synchronisé sur ce code reçu, et des codes E et L avancé et retardé d'un court intervalle de temps par rapport au code P. En pratique, la corrélation peut être effectuée avec le code P et un code différence E-L. Pour cela, on multiplie le signal de la voie I et le signal de la voie Q par le code P d'une part, par le code E-L d'autre part, grâce à quatre multiplieurs 28, 32, 34, 36.

Les sorties de ces multiplieurs sont appliquées à des intégrateurs 38, 42, 44, 46 respectivement, du type "integre and dump", qui sont lus toutes les millisecondes (fréquence de répétition du code pseudo-aléatoire à détecter) et remis à zéro périodiquement à ce moment.

Les sorties de ces intégrateurs numériques fournissent des signaux Ip, Id (corrélation sur la voie 1 par le code ponctuel P et le code différence E-L) et Qp, Qd (corrélation sur la voie Q par le code ponctuel et le code différence).

Classiquement, ces signaux servent au calcul de signaux d'erreur de calage des boucles d'asservissement de code et de porteuse. Le calcul est fait dans un circuit de calcul qui est en pratique le microprocesseur 60 qui contrôle l'ensemble du circuit de traitement de signal et qui fait les calculs de temps et position GPS. Le signal d'erreur de calage est de préférence obtenu par le produit scalaire des deux vecteurs corrélés Ip, Qp, et Id, Qd, avec un terme de normalisation $Ip^2 + Qp^2$ correspondant au fait que les énergies des signaux reçus varient dans le temps.

Le signal d'erreur est donc de la forme

$$(Ip.Id + Qp.Qd)/(Ip^2 + Qp^2)$$

Ce signal d'erreur est appliqué via le filtre 27 à l'oscillateur 26 qui pilote le générateur de code 24. Ce signal d'erreur devient nul lorsque les énergies de corrélation par les codes E et L sont égales, ce qui correspond à un synchronisme exact entre le code reçu du satellite et du code ponctuel engendré par le générateur 24.

Un autre calcul est fait parallèlement par le microprocesseur 60 pour fournir un signal d'erreur de phase de porteuse qui va contrôler l'oscillateur numérique 12 via un filtre de boucle 11. Ce calcul repose classiquement sur l'évaluation de Arctg(Qp/Ip) qui représente la différence des phases de l'oscillateur 12 et de la porteuse du signal reçu. Les deux boucles d'asservissement, de code et de porteuse prennent en compte le décalage de fréquence doppler sur la fréquence porteuse et sur le code, résultant du déplacement relatif de l'avion et du satellite poursuivi. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase 12 et 26. Cet état est par exemple mis en mémoire dans des registres numériques 48 et 52 et le contenu de ces registres est exploité par le microprocesseur. Le registre 48 contient donc l'état de la phase de la porteuse à l'instant de mesure, tandis que le registre 52 contient l'état de la phase de code ponctuel au même instant.

Les deux récepteurs GPS, ayant des antennes très proches l'une de l'autre, fournissent les mêmes mesures de position et de temps calculées à partir de la phase de code. Mais ils fournissent des mesures différentes de phase de porteuse à cause de la distance qui sépare les antennes A1 et A2.

Si l'instant de mesure est le même pour les deux récepteurs, la différence de phase de porteuse permet de calculer, après des opérations de lever d'ambiguïté classiquement nécessaires en matière de détection d'attitude, une direction du vecteur A1A2 et par suite un cap et une assiette longitudinale de l'avion.

L'instant de mesure n'est pas nécessairement le même pour les deux récepteurs, dont les fonctionnements ne sont pas rigoureusement synchrones. Mais le calcul des temps reçus, fait dans les deux récepteurs à partir de la phase de code, permet de ramener exactement à un même instant de mesure la comparaison de phases de porteuses. En effet, si le temps GPS reçu d'un satellite, tel que mesuré par le récepteur GPS1 est un temps T1 et si le temps GPS mesuré par le récepteur GPS2 à un autre moment est un temps T2, on peut calculer le déphasage de porteuse qui correspond à l'intervalle T2-T1, et le retrancher de la différence de phase calculée par les contenus des registres 48 des deux récepteurs, pour ramener le déphasage à la valeur qu'il aurait si les temps T1 et T2 étaient confondus. Le déphasage de la porteuse pour l'intervalle T2-T1 est connu puisqu'on connaît la fréquence porteuse émise (1575,42 MHz) et son décalage doppler (en pratique, seul le décalage doppler intervient).

Ainsi, bien que les récepteurs GPS1 et GPS2 soient indépendants, ils permettent de calculer, par interférométrie sur la phase de porteuse, le cap et l'assiette de l'avion.

Si les deux récepteurs communiquent avec le calculateur HUDC, ce dernier effectuant le calcul de cap et d'assiette, ils envoient tous deux par des bus ARINC les informations numériques suivantes :

- identification et validité des satellites observés à un moment donné;
- temps reçu de ces satellites, calculé par les récepteurs à partir d'une phase de code local synchronisé sur un code reçu d'un satellite;
- vitesse doppler mesurée par mesure du décalage de fréquences porteuses émise par les satellites;
- directions des satellites observés, calculées à partir des informations précédentes ;
- phase de la porteuse mesurée par l'état de phase de l'oscillateur à commande numérique de phase 12.

Le calculateur HUDC calcule alors, à partir de ces informations, la direction du vecteur séparant les deux antennes et en déduit des valeurs de cap et d'assiette à comparer à celles fournies par la centrale AHRS.

Les récepteurs peuvent aussi communiquer l'un avec l'autre, l'un des récepteurs, par exemple GPS2, fournissant à l'autre (GPS1) les informations suivantes :

- identification des satellites observés à un moment donné;
- temps reçu de ces satellites, calculé par le récepteur à partir d'une phase de code local synchronisé sur un code reçu d'un satellite;
- vitesse doppler mesurée par mesure du décalage de fréquences porteuses émises par les satellites;
- phase de la porteuse mesurée par l'état de phase de l'oscillateur à commande numérique de phase 12.

Le deuxième récepteur dispose des mêmes informations de son côté, et calcule, à partir des deux jeux d'informations, la direction du vecteur séparant les antennes, afin de fournir cette direction au calculateur HUDC. Ce dernier s'en sert pour calculer un cap et une assiette et corriger les erreurs de la centrale AHRS.

Enfin, dans le cas où le vecteur A1A2 reliant les centres des antennes A1 et A2 n'est pas parfaitement parallèle à l'axe longitudinal de l'avion, la connaissance de la direction du vecteur A1A2 ne fournit pas directement le cap et l'assiette longitudinale de l'avion. Si l'avion n'a pas de roulis, il faut retrancher de la direction calculée l'erreur de parallélisme. Si l'avion présente un angle de roulis à un moment donné, ce roulis influe sur les coordonnées du vecteur d'erreur de parallélisme à retrancher. L'angle de roulis peut être fourni simplement par la centrale AHRS, et le calculateur fera la correction nécessaire, en fonction du roulis, avant de calculer les écarts et les moyennes d'écarts d'informations entre l'attitude fournie par la centrale et l'attitude fournie à partir des indications des récepteurs GPS.

**Revendications**

1. Système d'aide au pilotage d'un aéronef, qui comporte un viseur tête haute (HUD) et son calculateur (HUDC), le calculateur comportant des moyens pour contrôler le viseur pour afficher des symboles d'aide au pilotage et notamment un symbole d'assiette de l'aéronef, caractérisé en ce qu'il comprend en outre une centrale de cap et d'assiette non inertielle AHRS associée à une boussole (10), pour fournir des informations de cap, d'assiette, d'accélérations, et de vitesse verticale au calculateur en vue de l'affichage des symboles sur le viseur tête haute, et deux récepteurs de positionnement par satellite (GPS1, GPS2) ayant des antennes (A1, A2) alignées sensiblement selon l'axe longitudinal de l'avion, les récepteurs fournissant des signaux au calculateur, et des moyens pour confronter les mesures fournies par les deux récepteurs pour établir des informations de cap et d'assiette de l'aéronef à partir de comparaisons de phase des signaux reçus au même moment d'un même satellite par les deux récepteurs, des moyens dans le calculateur pour calculer une moyenne des écarts entre les informations d'assiette et de cap calculées à partir des signaux des récepteurs de positionnement par satellite et les informations d'assiette et de cap fournies par la centrale AHRS, et des moyens pour corriger, à partir de cette moyenne d'écarts, les informations de cap et d'assiette fournies par la centrale AHRS en vue de générer, à partir des informations corrigées, les symboles à afficher sur le viseur tête haute.

2. Système selon la revendication 1, caractérisé en ce que le calculateur comporte des moyens pour calculer périodiquement les écarts et établir une moyenne glissante de plusieurs écarts successivement mesurés.

3. Système selon l'une des revendications 1 et 2, caractérisé en ce que des moyens sont prévus dans le calculateur pour fournir une information de cap et d'assiette de l'aéronef, corrigée par rapport à l'information brute de direction du vecteur séparant les antennes pour tenir compte d'un angle de divergence entre le vecteur séparant les antennes et un axe principal de l'aéronef, et des moyens pour tenir compte du roulis de l'aéronef dans ce calcul de correction, le roulis étant fourni par la centrale AHRS, les informations de cap et d'assiette .

4. Système selon l'une des revendications précédentes, caractérisé en ce que les calculs d'attitude par comparaisons de phase sont effectués en prenant en compte, pour le lever d'ambiguïté de phase inhérent à une tel calcul, une information de cap et d'assiette fournie par la centrale AHRS.

5. Système selon l'une des revendications précédentes, caractérisé en ce que les deux récepteurs de positionnement par satellite communiquent avec le calculateur, pour lui envoyer chacun :

- identification des satellites observés à un moment donné;
- temps reçus de ces satellites, calculés par les récepteurs à partir d'une phase de code pseudo-aléatoire local synchronisé sur un code reçu d'un satellite;
- vitesse doppler mesurée par mesure du décalage de fréquences porteuses émise par les satellites;
- directions des satellites observés, calculées à partir des informations précédentes;
- phase de la porteuse mesurée par l'état de phase d'un oscillateur à commande numérique au moment donné;

le calculateur étant apte à déterminer, à partir des informations fournies par les deux récepteurs, et notamment les mesures de phase, la direction du vecteur séparant les antennes.

**6.** Système selon l'une des revendications 1 à 4, caractérisé en ce que les deux récepteurs de positionnement par satellite communiquent par un bus, l'un des récepteurs (GPS2) fournissant à l'autre (GPS1) les informations suivantes :

- identification des satellites observés à un moment donné;
- temps reçus de ces satellites, calculés par le récepteur à partir d'une phase de code pseudo-aléatoire local synchronisé sur un code reçu d'un satellite;
- vitesse doppler mesurée par mesure du décalage de fréquences porteuses émise par les satellites;
- phase de la porteuse mesurée par l'état de phase d'un oscillateur à commande numérique au moment donné,

le deuxième récepteur étant apte à déterminer les mêmes informations pour lui-même et à calculer, à partir des deux jeux d'informations, la direction du vecteur séparant les antennes, afin de fournir cette direction au calculateur.

**Patentansprüche**

**1.** System zur Unterstützung der Führung eines Luftfahrzeugs mit einer Head-Up-Anzeigevorrichtung (HUD) und einem zu dieser gehörenden Rechner (HUDC), der Mittel umfaßt, die die Anzeigevorrichtung steuern, um Symbole für die Führungsunterstützung und insbesondere ein Symbol für die Lage des Luftfahrzeugs anzuzeigen, dadurch gekennzeichnet, daß es darüber hinaus ein mit einem Kompaß (10) verbundenes nichtinertiales AHRS-System, das dazu dient, Informationen über den Kurs, die Lage, die Beschleunigungen und die Geschwindigkeit in vertikaler Richtung zu dem Rechner zu liefern, um die Symbole auf der Head-Up-Anzeigevorrichtung anzeigen zu können, zwei Empfänger von über Satellit übertragenen Positionierungen (GPS1, GPS2), die Antennen (A1, A2) aufweisen, die im wesentlichen entlang der Längsachse des Flugzeugs ausgerichtet sind, wobei die Empfänger Signale zum Rechner liefern, Mittel, die die von den zwei Empfängern gelieferten Meßwerte einander gegenüberstellen, um Informationen über den Kurs und die Lage des Luftfahrzeugs ausgehend von Vergleichen der Phase der im gleichen Zeitpunkt von demselben Satellit von den beiden Empfängern empfangenen Signale zu erzeugen, in dem Rechner vorhandene Mittel, die einen Mittelwert der Abstände zwischen den Lage- und Kurs-Informationen, die ausgehend von den Signalen der Empfänger von über Satellit übertragenen Positionierungen berechnet wurden, und den Lage- und Kurs-Informationen berechnen, die von dem AHRS-System geliefert wurden, und Mittel umfaßt, die ausgehend von dem Mittelwert der Abstände die durch das AHRS-System gelieferten Kurs- und Lageinformationen korrigieren, um ausgehend von den korrigierten Informationen die auf der Head-Up-Anzeigevorrichtung anzuzeigenden Symbole zu erzeugen.

**2.** System nach Anspruch 1, dadurch gekennzeichnet, daß der Rechner Mittel umfaßt, die periodisch die Abstände berechnen und einen gleitenden Mittelwert mehrerer aufeinanderfolgend gemessener Abstände erzeugen.

**3.** System nach einem der Ansprüche 1 und 2, dadurch gekennzeichnet, daß Mittel in dem Rechner vorgesehen sind, um Informationen über den Kurs und die Lage des Luftfahrzeugs zu liefern, die im Vergleich zu unbearbeiteten Informationen über die Richtung des die Antennen trennenden Vektors korrigiert sind, um den Winkel der Abweichung zwischen dem die Antennen trennenden Vektor und einer Hauptachse des Luftfahrzeugs zu berücksichtigen, und Mittel vorgesehen sind, die die Drehbewegung des Luftfahrzeugs bei der Berechnung der Korrektur berücksichtigen, wobei die Drehung mittels des Systems AHRS, der Informationen über den Kurs und der Informationen über die Lage geliefert wird.

**4.** System nach einem der vorhergehenden Ansprüche, dadurch gekennzeichnet, daß die Lageberechnungen durch Phasenvergleiche zur Beiseitung der einer solchen Berechnung innewohnenden Phasenunbestimmtheit unter Berücksichtigung von von dem System AHRS gelieferten Informationen über den Kurs und die Lage durchgeführt werden.

**5.** System nach einem der vorhergehenden Ansprüche, dadurch gekennzeichnet, daß die zwei Empfänger von über Satellit empfangenen Positionierungen mit dem Rechner Daten austauschen, um diesem jeweils

eine Kennung der in einem bestimmten Zeitpunkt beobachteten Satelliten; die von den Satelliten empfangenen Zeitpunkte, die von den Empfängern ausgehend von einer Phase eines pseudozufälligen lokalen Codes berechnet wurden, der mit einem von einem Satelliten empfangenen Code synchronisiert ist;

die Dopplergeschwindigkeit, die durch Messung der Verschiebung der von den Satelliten ausgesendeten Trägerwellenfrequenzen gemessen wurde;
die Richtungen der beobachteten Satelliten, die auf der Basis der vorhergehenden Informationen berechnet wurden; und
die Phase der Trägerwelle zu senden, die über den Zustand der Phase eines numerisch gesteuerten Oszillators in dem bestimmten Zeitpunkt gemessen wurde;

wobei der Rechner ausgehend von den von den zwei Empfängern gelieferten Informationen und insbesondere den Messungen der Phase die Richtung des die beiden Antennen trennenden Vektors bestimmen kann.

6. System nach einem der Ansprüche 1 bis 4, dadurch gekennzeichnet, daß die zwei Empfänger von über Satellit empfangenen Positionierungen über einen Bus Daten austauschen, wobei der eine Empfänger (GPS2) an den anderen Empfänger (GPS1) die folgenden Informationen liefert:

eine Kennung der in einem bestimmten Zeitpunkt beobachteten Satelliten;
die von den Satelliten empfangenen Zeitpunkte, die von dem Empfänger ausgehend von einer Phase eines pseudozufälligen lokalen Codes berechnet wurden, der mit einem von einem Satelliten empfangenen Code synchronisiert ist;
die Dopplergeschwindigkeit, die durch Messung der Verschiebung der von den Satelliten ausgesendeten Trägerwellenfrequenzen gemessen wurde; und
die Phase der Trägerwelle zu senden, die über den Zustand der Phase eines numerisch gesteuerten Oszillators in dem bestimmten Zeitpunkt gemessen wurde;

wobei der zweite Empfänger die gleichen Informationen für sich selbst bestimmen kann und ausgehend von den zwei Sätzen an Informationen die Richtung des die beiden Antennen trennenden Vektors bestimmen kann, um diese Richtung dem Rechner zu liefern.

## Claims

1. System for aiding the piloting of an aircraft, which system comprises a head-up display (HUD) and its computer (HUDC), the computer comprising means for controlling the display in order to exhibit symbols for aiding piloting, and especially an aircraft attitude symbol, characterised in that it furthermore comprises a non-inertial attitude and heading unit AHRS associated with a compass (10), for supplying heading, attitude, acceleration and vertical velocity information to the computer with a view to exhibiting the symbols on the head-up display, and two satellite positioning receivers (GPS1, GPS2) having antennas (A1, A2) substantially aligned with the longitudinal axis of the aeroplane, the receivers supplying signals to the computer, and means for contrasting the measurements supplied by the two receivers so as to establish aircraft heading and attitude information from phase comparisons of the signals received at the same point in time from the same satellite by the two receivers, means in the computer for computing an average of the deviations between the attitude and heading information calculated from the signals of the satellite positioning receivers and the attitude and heading information supplied by the AHRS unit, and means for correcting, on the basis of this average of deviations, the heading and attitude information supplied by the AHRS unit with a view to generating, from the corrected information, the symbols to be exhibited on the head-up display.

2. System according to claim 1, characterised in that the computer comprises means for periodically computing the deviations and establishing a sliding average of a plurality of successively measured deviations.

3. System according to one of claims 1 and 2, characterised in that means are provided in the computer for supplying an aircraft heading and attitude information item, corrected with respect to the raw information item for the direction of the vector separating the antennas so as to take into account an angle of divergence between the vector separating the antennas and a principal axis of the aircraft, and means for taking into account the roll of the aircraft in this correction computation, the roll being supplied by the AHRS unit, the heading and attitude information.

4. System according to one of the preceding claims, characterised in that the trim computations through phase comparisons are performed while taking into account, in order to resolve the phase ambiguity inherent in such a computation, a heading and attitude information item supplied by the AHRS unit.

5. System according to one of the preceding claims, characterised in that the two satellite positioning receivers communicate with the computer so as to each send to it:

- identification of the satellites observed at a given point in time;

- times received from these satellites, computed by the receivers on the basis of a phase with local pseudorandom code synchronised with a code received from a satellite;
- Doppler velocity measured by measuring the shift in carrier frequencies transmitted by the satellites;
- directions of the satellites observed, computed from the above information;
- phase of the carrier measured by the phase state of a digitally controlled oscillator at the given point in time;

the computer being able to determine, from the information supplied by the two receivers, and especially the phase measurements, the direction of the vector separating the antennas.

6. System according to one of claims 1 to 4, characterised in that the two satellite positioning receivers communicate via a bus, one of the receivers (GPS2) supplying the other (GPS1) with the following information:

- identification of the satellites observed at a given point in time;
- times received from these satellites, computed by the receiver on the basis of a phase with local pseudorandom code synchronised with a code received from a satellite;
- Doppler velocity measured by measuring the shift in carrier frequencies transmitted by the satellites;
- phase of the carrier measured by the phase state of a digitally controlled oscillator at the given point in time;

the second receiver being able to determine the same information for itself and to compute, from the two sets of information, the direction of the vector separating the antennas, so as to supply this direction to the computer.

GA

+20 —
+15 —                                    AH
+10 —
+ 5 —                                    HZ
0 —
− 5 —
−10 —                          VV
−15 —
−20 —

# FIG.1

BOUSSOLE — 10          HUD

RMCU

$\theta, \varphi, \psi \begin{cases} \psi_{géo} \\ \psi_{mag} \end{cases}$

$a_x, a_y, a_z$
Vzbi

AHRS          HUDC          AHRS

A1                                    A2

GPS 1          GPS 2

LEVER D'AMBIGUITÉ

# FIG.2

FIG.3

FIG.4

FIG.5

EP 0 875 002 B1